# EUROPEAN PATENT SPECIFICATION

(11) **EP 2 935 438 B1**
(45) Date of publication and mention of the grant of the patent: **08.11.2017**
(21) Application number: 13818985.7
(22) Date of filing: 20.12.2013
(51) Int. Cl.: C08K 5/00, C08K 5/3435, C08L 23/02

(54) **USE OF ADDITIVES FOR IMPROVING PIPE STABILITY AGAINST DESINFECTANT CONTAINING WATER**
VERWENDUNG VON PIGMENTEN UND ZUSÄTZEN ZUR VERBESSERUNG DER ROHRSTABILITÄT GEGEN DESINFEKTIONSMITTELHALTIGES WASSER
UTILISATION DE PIGMENTS ET ADDITIFS DESTINÉS À AMÉLIORER LA STABILITÉ DE CONDUITE CONTRE UN DÉSINFECTANT CONTENANT DE L'EAU

(30) Priority: 21.12.2012 EP 12008539
(43) Date of publication of application: 28.10.2015
(73) Proprietor: Borealis AG, 1220 Vienna (AT)
(72) Inventor: HJERTBERG, Thomas, 432 56 Kungshamn (SE); ODERKERK, Jeroen, 44452 Stenungsund (SE); COSTA, Francis, 4040 Linz (AT); JERUZAL, Mark, FK2 OUN Falkirk (GB); TRAN, Anh Tuan, 4020 Linz (AT)
(74) Representative: Kador & Partner
(86) International application number: PCT/EP2013/003950
(87) International publication number: WO 2014/095090

(56) References cited:
- EP-A1- 0 761 751
- EP-A1- 1 201 712
- EP-A1- 2 361 951
- WO-A1-96/09343
- WO-A1-2009/053228
- WO-A2-03/064511
- DATABASE WPI Week 199932, Derwent Publications Ltd., London, GB; AN 1999-379945 & JP H11 147 976 A (TOYO INK MFG CO LTD) 02 June 1999

## Description

The present invention relates to the use of additives in a polyolefin composition for improving the resistance of pipes to chlorine species containing water.

In many regions of the world tap water needs to contain disinfectants to guarantee safety for the consumer. For transporting the water plastic pipes are very suitable as they are not susceptible to corrosion in contrast to metal pipes. However, plastic pipes, i.e. pipes made of polymeric material, are already innately susceptible to aging resulting in a loss of strength, stiffness and flexibility, discoloration and unpleasant appearance. The disinfectants commonly added to the water are chlorine species like chlorine and increasingly chlorine dioxide. Especially chlorine dioxide is highly aggressive due to its strong oxidizing action. The aging process of the pipes is therefore considerably accelerated when such chlorine species are contained in the tap water. The situation is even worse in case of transporting warm water or regions with hot climate heating up the pipes and if the water is pressurized. Hence, if plastic pipes are not replaced rather frequently leakage and even breakage of the pipes will occur which may result in damage to property and high costs of recondition. Nevertheless, also the periodical replacement of the pipes is connected with high costs. Moreover, from an ecological point of view lots of plastic waste is produced which could be avoided by the use of pipes having a prolonged life time.

During the last years much effort has been made to overcome these demands. Hence, today it is well-known in the art that antioxidants and light stabilizers can prevent or at least increase resistance to chlorine species containing water. Several types of additives, especially stabilizers, are added to polymers to protect them during processing and to achieve the desired end-use properties. Stabilizers traditionally and currently used comprise sterically hindered phenolics, aromatic amines, hindered amine stabilizers, organo-phosphites/phosphonites and thioethers. However, appropriate combinations of stabilizers have to be carefully selected, depending on the desired final properties, the polymeric article should have and depending on the field of application. JP 62-158 737 discloses a polyolefin composition with excellent thermal process stability and colouring resistance comprising a 6-hydroxy coumarone compound and a phenolic compound or a phosphonite compound.

EP 1 024 165 discloses a stabilizer composition for organic polymeric materials containing 6-hydroxychroman compounds and a phenolic antioxidant.

WO 97/49758 discloses stabilizer compositions comprising at least one sterically hindered phenol, at least one phosphorus-containing antioxidant and at least one tocopherol compound.

However, during the last years it has turned out that antioxidants used in polyolefin compositions for pipes known to provide a good resistance to chlorinated water do not necessarily provide satisfactory resistance against chlorine dioxide containing water. As, however, chlorine dioxide is increasingly used as water disinfectant there is still a need for a more efficient protection of a polyolefin composition being in long term contact with ClO₂-containing water, and thus allows for a longer lifetime of e.g. a pipe made of the polyolefin composition.

Surprisingly it was found that the above object can be solved by using an additive of the below formula (I) contained in a polyolefin composition further comprising a macrocyclic organic pigment. Accordingly, the present invention is based on the finding that by using an UV-stabilizer of the below formula (I) in a polyolefin composition further comprising a macrocyclic organic pigment the life time of a pipe made of the polyolefin composition can be prolonged.

Hence, the present invention provides the use of an UV-stabilizer (A) of formula (I): 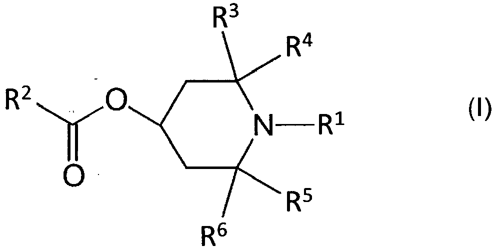 wherein
- R¹ and R² are independently H or non-substituted or substituted aliphatic or aromatic hydrocarbyl radicals which may comprise ester groups and heteroatoms; and
- R³, R⁴, R⁵ and R⁶ are independently non-substituted or substituted aliphatic C₁-C₄ hydrocarbyl radicals for increasing the resistance of a polyolefin composition against degradation caused by contact with chlorine dioxide containing water, wherein the polyolefin composition further comprises a macrocyclic organic pigment (B).
It has surprisingly been found that addition of the UV-stabilizer (A) of the present invention increases the resistance of a polyolefin composition further comprising a macrocyclic organic pigment against degradation caused by chlorine dioxide containing water.

For the present invention the following specifications apply:

### 1) Chlorine species containing water

The chlorine species containing water is chlorine dioxide containing water.

Preferably, the concentration of the chlorine species in the chlorine species containing water is 0.1 to 10 ppm, more preferably 0.3 to 5 ppm and most preferably 0.5 to 2 ppm.

### 2) UV-stabilizer (A)

The UV-stabilizer (A) according to the use of the present invention has the following formula (I): 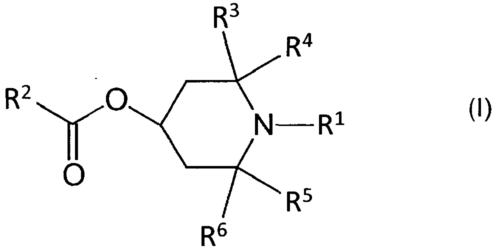 wherein
- R¹ and R² are independently H or non-substituted or substituted aliphatic or aromatic hydrocarbyl radicals which may comprise ester groups and/or heteroatoms; and
- R³, R⁴, R⁵ and R⁶ are independently non-substituted or substituted aliphatic C₁-C₄ hydrocarbyl radicals.

The heteroatoms which may be present in the non-substituted or substituted aliphatic or aromatic hydrocarbyl radicals R¹ and R² of UV-stabilizer (A) according to formula (I) may be oxygen, sulphur, nitrogen, phosphorus or the like. Preferably, the heteroatoms are oxygen or nitrogen or a combination thereof.

Preferably, R³, R⁴, R⁵ and R⁶ of formula (I) are independently methyl, ethyl and/or propyl. More preferably, R³, R⁴, R⁵ and R⁶ are all methyl.

It is additionally prefered that the UV-stabilizer (A) is polymeric. Polymeric means that the UV stabilizer (A) may comprise the structural unit according to formula (I) several times, e.g. two, three or more times. For example, two structural units according to formula (I) may be linked to each other via a bridging group.

Additionally the UV-stabilizer (A) preferably does not contain a triazin structure.

Furthermore, the UV-stabilizer (A) is preferably saturated.

Preferably the UV-stabilizer (A) has the following formula (II): 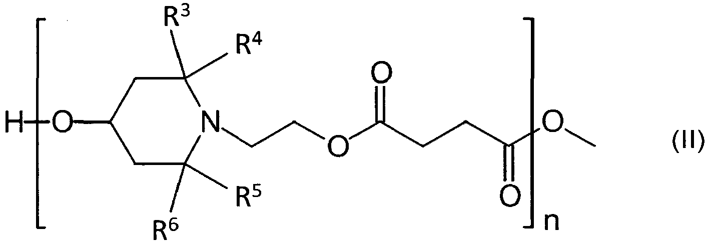 wherein
- R³, R⁴, R⁵ and R⁶ are independently non-substituted or substituted aliphatic C₁-C₁₀ hydrocarbyl radicals; and
- n is 2 to 250.

Preferably, R³, R⁴, R⁵ and R⁶ of formula (I) and/or (II) are independently methyl, ethyl and/or propyl. More preferably, R³, R⁴, R⁵ and R⁶ are methyl.

Furthermore, n is preferably 4 to 240, more preferably, 6 to 230 and most preferably 8 to 220.

The UV-stabilizer (A) according the use of the present invention is suitably a commercially available hindered amine light stabilizer (HALS) like the Dimethyl succinate polymer with 4-hydroxy-2,2,6,6-tetramethyl-1-piperidine ethanol (CAS No.: 65447-77-0; commercially available from CIBA (BASF) as Tinuvin 622).

Moreover, the concentration of the UV-stabilizer (A) in polyolefin composition according to the use of the present invention is preferably 0.01 to 1 wt.-%, more preferably 0.05 to 0.7 wt.-%, even more preferably 0.1 to 0.5 wt.-% and most preferably 0.2 to 0.4 wt.-% based on the total weight of the polyolefin composition.

The UV-stabilizer (A) can be added separately to the base resin in the compounding step described below.

However, UV-stabilizer (A) can also be comprised in a master batch which is added to the base resin in the compounding step described below.

### 3) Macrocyclic organic pigment (B)

The polyolefin composition further comprises a macrocyclic organic pigment (B).

A macrocycle is defined by IUPAC as a cyclic macromolecule or a macromolecular cyclic portion of a macromolecule (IUPAC Compendium of Chemical Technology).

The macrocyclic organic pigment (B) suitably comprises a chemical structure selected from the group consisting of phthalocyanine (Pc), porphyrin, cyanine, or derivatives of them or any mixtures thereof of two or more of them. Preferably, macrocyclic organic pigment (B) comprises a Pc and/or a derivative thereof. More preferably, the macrocyclic organic pigment (B) is a metall complex of Pc and/or a derivative thereof. Even more preferably the metall complex of Pc and/or a derivative thereof is selected from aluminum-Pc, nickel-Pc, cobalt-Pc, iron-Pc, zinc-Pc, manganese-Pc, titan-Pc, vanadium-Pc, copper-Pc (CuPc), their derivatives or any combination of two or more thereof. Further even more preferably, the macrocyclic organic pigment (B) is copper phthalocyanine (CuPc) and/or a derivative thereof.

Preferably, the macrocyclic organic pigment (B) is halogenated CuPc and/or a derivative thereof (CuPc-Halₘ), wherein Hal means halogen atom and m is 0.5 to 18. Preferably m is 0.5 to 17, more preferably m is 0.5 to 15.5, even more preferably m is 0.5 to 4 and most preferably m is 0.5 to 1 halogen atoms per CuPc-Halₘ molecule, wherein m is any real number within the given intervals and indicates the average halogenation of the CuPc-Halₘ-molecules and/or a derivative thereof. Preferably, the halogen atoms are selected from chlorine (Cl) or bromine (Br) or a combination thereof. Most preferably the halogen atoms are chlorine.

Furthermore, the macrocyclic organic pigment (B) can be a polymorph CuPc and/or a derivative thereof or a non-polymorph CuPc and/or a derivative thereof or any combination thereof. Preferably, the macrocyclic organic pigment (B) is a polymorph CuPc and/or a derivative thereof.

Preferably, the macrocyclic organic pigment (B) is the polymorph CuPc and/or a derivative thereof in the α-, β- and/or ε- crystal modification (α-CuPc, β-CuPc and/or ε-CuPc), more preferably in the α- and/or β-crystal modification (α-CuPc and/or β-CuPc) and most preferably in the α-crystal modification (α-CuPc).

Furthermore, the macrocyclic organic pigment (B) is the polymorph CuPc and/or a derivative thereof phase stabilized (^{s}) in the α- and/or ε- crystal modification (α^{s}-CuPc and/or ε^{s}-CuPc) and most preferably in the α-crystal modification (α^{s}-CuPc).

Preferably, the phase stabilization of the polymorph CuPc and/or a derivative thereof occurs in that the macrocyclic organic pigment (B) comprises additional Pc's well known in the art (chapter 3.1 "Industrielle Organische Pigmente", W. Herbst, K. Hunger, 2nd Edition, VHC; ISBN 3-52728744) and/or by halogenation of the polymorph CuPc and/or a derivative thereof.

Preferably, the macrocyclic organic pigment (B) is CuPc and/or a derivative thereof phase stabilized in the α-crystal modification by halogenation (α^{s}-CuPc-Halₘ), wherein Hal means halogen atom and m is 0.5 to 4. Preferably m is 0.5 to 3, more preferably m is 0.5 to 2 and most preferably m is 0.5 to 1, wherein m is any real number within the given intervals and indicates the average halogenation of the α^{s}-CuPc-Halₘ-molecules. Preferably, the halogen atoms (Hal) are selected from chlorine (CI) or bromine (Br) or a combination thereof and more preferably the halogen atoms are chlorine.

More preferably, the macrocyclic organic pigment (B) is CuPc and/or a derivative thereof phase stabilized in the α-crystal modification by halogenation (α^{s}-CuPc-Clₘ), wherein Cl means chlorine and m is 0.5 to 1.

Even more preferably, the macrocyclic organic pigment (B) is CuPc phase stabilized in the α-crystal modification by halogenation (α^{s}-CuPc-Clₘ), wherein Cl means chlorine and m is 0.5 to 1.

The macrocyclic organic pigment (B) can be halogenated non-polymorph (^{np}) CuPc and/or a derivative thereof (CuPc^{np}-Halₘ), wherein Hal means halogen atom and m is 0.5 to 18. Preferably m is 2 to 17, more preferably m is 4 to 16.5 and most preferably m is 13 to 16, wherein m is any real number within the given intervals and indicates the average halogenation of the CuPc^{np}- Halₘ-molecules. Preferably, the halogen atoms are selected from chlorine (Cl) or bromine (Br) or a combination thereof. More preferably the halogen atoms are a combination of chlorine and bromine, wherein n is the sum of the real number of Br-atoms and the real number of Cl-atoms per CuPc^{np}- Halₘ-molecule. Preferably the real number of Br-atoms is from 4 to 13 and the real number of Cl-atoms from 8 to 2 per CuPc^{np}-molecule. Even more preferably the halogen atoms are chlorine.

Furthermore the macrocyclic organic pigment (B) and/or a derivative thereof can further comprises additional Pc's to avoid flocculation of the CuPc and/or a derivative thereof. Furthermore, these additional Pc's may support phase stabilization of a polymorph CuPc and/or a derivative thereof. These further Pc's and substances are well known in the art (chapter 3.1 "Industrielle Organische Pigmente", W. Herbst, K. Hunger, 2nd Edition, VHC; ISBN 3-52728744). The additional Pc's typically used include CuPc which is modified by sulfonation, sulfoamidation, introduction of carboxylic acid groups, dialkylaminomethylen groups, ect, and include metall complexes of Pc other than Copper, like aluminum-Pc, magnesium-Pc, iron-Pc, cobalt-Pc, titan-Pc, vanadium-Pc; and/or carboxy-CuPc, carboamido-CuPc, sulfo-CuPc and/or phospho-CuPc. These additional Pc's are contained in the macrocyclic organic pigment (B) in an amout of 2-11 wt.-% based on the weight of the macrocyclic organic pigment (B).

The macrocyclic organic pigment (B) according to the use of the present invention is suitably a commercially available pigment selected from Colour Index (C.I.) Pigment Blue 15 (α-CuPc; CAS no.: 147-14-8), C.I. Pigment Blue 15:1 (α-CuPc^{s}-Cl_{0.5-1}; CAS no.: 147-14-8), C.I. Pigment Blue 15:2 (α-CuPc^{s}-Cl_{0.5-1}; CAS no.: 147-14-8), C.I. Pigment Blue 15:3 (β-CuPc; CAS no.: 147-14-8), C.I. Pigment Blue 15:4 (β-CuPc; CAS no.: 147-14-8), Pigment Blue 15:6 (ε-CuPc; CAS no.: 147-14-8), C.I. Pigment Blue 16 (Pc; 574-93-6), C.I. Pigment Green 7 (CuPc-Cl₁₄₋₁₅; CAS no.: 1328-53-6) and/or C.I. Pigment Green 36 (CuPc-Br₁₄₋₁₅Cl₈₋₂; CAS no.: 14302-13-7) and mixtures thereof. Especially suitable are C.I. Pigment Blue 15:1, C.I. Pigment Blue 15:3 and C.I. Pigment Green 7 and mixtures thereof. Most suitable is C.I. Pigment Blue 15:1.

Preferably, the concentration of the macrocyclic organic pigment (B) in the polyolefin composition according to the use of the present invention is 0.01 to 10 wt.-% based on the total polyolefin composition. More preferably the concentration of the macrocyclic organic pigment (B) is 0.02 to 5.0 wt.-%, even more preferably 0.03 to 2.0 wt.-% and most preferably 0.04 to 1.0 wt.-% based on the total weight of the polyolefin composition.

Furthermore the macrocyclic organic pigments (B) may comprise only one of the above prefered Pc's or a derivative thereof or any combination of two or more of the above prefered Pc's and/or derivatives thereof.

The macrocyclic organic pigment (B) can be added separately to the base resin in the compounding step described below.

However, the macrocyclic organic pigment (B) can also be comprised in a master batch which is added to the base resin in the compounding step described below.

### 4) Inorganic pigment (C)

Furthemore it is prefered that the polyolefin composition according to the use of the of the present invention comprises one or more inorganic pigments (C).

Preferably, the one or more inorganic pigments (C) are selected from Ultramarine Blue having the CAS No: 57455-47-5 or titanium dioxide having the CAS No: 13463-67-7 or a combination thereof.

The one or more inorganic pigments (C) according to the use of the present invention are suitably commercially available pigments. For Ultramarine Blue is for instance Pigment Blue 29 (CAS No: 57455-47-5) may be used and for titanium dioxide C.I. Pigment White 6 (CAS No: 13463-67-7) or Anatase (CAS No: 98084-96-9).

Preferably, the total concentration of the one or more inorganic pigments (C) in the polyolefin composition according to the use of the present invention is 0.1 to 1 wt.-% based on the total polyolefin composition. More preferably the concentration of the one or more inorganic pigments (C) is 0.05 to 0.7 wt.-%, even more preferably 0.1 to 0.5 wt.-% and most preferably 0.15 to 0.4 wt.-% based on the total weight of the polyolefin composition.

Furthermore, the concentration of the Ultramarine Blue in the polyolefin composition is preferably 0.01 to 1 wt.-%, more preferably, 0.05 to 0.5 wt.-% and most preferably 0.1 to 0.3 wt.-% based on the total weight of the polyolefin composition.

The concentration of the titanium dioxide in the polyolefin composition is preferably 0.01 to 0.5 wt.-%, more preferably, 0.02 to 0.2 wt.-% and most preferably 0.03 to 0.1 wt.-% based on the total weight of the polyolefin composition.

The one or more inorganic pigments (C) can be added separately to the base resin in the compounding step described below.

However, the one or more inorganic pigments (C) can also be comprised in a master batch which is added to the base resin in the compounding step described below.

Moreover, the total concentration of pigments in the polyolefin composition according to the use of the present invention is preferably 0.01 to 2 wt.-%, more preferably, 0.05 to 1 wt.-%, even more preferably 0.1 to 0.5 wt.-% and most preferably 0.15 to 0.35 wt.-% based on the weight of the total polyolefin composition. The total concentration of pigments refers the the sum of the concentrations of the macrocyclic organic pigment (B) and the one or more inorganic pigment (C).

Additionally, the polyolefin composition pigments optionally may contain further pigments, not mentioned herein. The concentration of all pigments in the polyolefin composition is preferably less than 2.5 wt.-%, more preferably less than 1.5 wt.-% and most preferably less than 0.7 wt.-% based on the total weight of the polyolefin composition. The concentration of all pigments refers the the sum of the concentrations of the macrocyclic organic pigment (B), the one or more inorganic pigment (C) and the further pigments.

### 5) Master batch

The term "master batch" denotes a polymeric composition comprising in a polymeric carrier material optimally dispersed a high concentration of one or more additives. The one or more additives typically comprised are selected from pigments, stabilizers, acid scavengers, UV-stabilizers, antistatic agents, utilization agents (such as processing aid agents), demoulding agents, nucleating agents, fillers or foaming agents or the like or a combination thereof. The polymeric carrier material needs to have a good polymer-polymer misciblity with the polymeric resin used to make up the final polyolefin composition to form after compounding a single phase polymer-polymer-mixture. Polymeric carrier materials typically used comprise polyethylene, polyethylene copolymer, polypropylene, polystyrene, ethylene vinyl acetate, low molecular weight wax, alkyl resin, or the like.

According to the use of the present application the polymeric carrier material is preferably polyethylene and the polyolefin composition is the polyolefin composition according to the use of the present invention and the polymeric resin is the base resin according to the use of the present invention.

Preferably, the masterbatch comprises the macrocyclic organic pigment (B). More preferably the masterbatch can also comprise the macrocyclic organic pigment (B) and the one or more inorganic pigment (C). In a preferred embodiment of the present invention the masterbatch comprises the macrocyclic organic pigment (B), the one or more inorganic pigment (C) and the UV-Stabilizer (A).

However, components (A), (B) and (C) can also be added in different master batches.

The concentration of the macrocyclic organic pigment (B) in the master batch is preferably 0.5 to 40 wt.-% based on the total weight of the master batch. More preferably the concentration of the macrocyclic organic pigment (A) is 1 to 30 wt.-% and even more preferably 1.5 to 20 wt.-% and most preferably 2 to 10 wt.-%.

Furthermore, the concentration of the inorganic pigment (C) in the master batch is preferably 0.5 to 45 wt.-% based on the total weight of the master batch. More preferably the concentration of the organic pigment (C) is 1 to 35 wt.-% and even more preferably 5 to 25 wt.-% and most preferably 7 to 15 wt.-%.

The concentration of the Ultramarine Blue in the master batch is preferably 0.5 to 20 wt.-% based on the total weight of the master batch. More preferably the concentration of the Ultramarine Blue is 1 to 15 wt.-% and most preferably 5 to 10 wt.-%.

Furthermore, the concentration of the titanium dioxide in the master batch is preferably 0.5 to 40 wt.-% based on the total weight of the master batch. More preferably the concentration of the titanium dioxide is 1 to 30 wt.-% and even more preferably 1.5 to 20 wt.-% and most preferably 2 to 10 wt.-%.

Preferably, the concentration of the UV-stabilizer (A) in the master batch is 1 to 20 wt.-%, more preferably 5 to 17 wt.-% and more preferably 10 to 15 wt.-% based on the total weight of the master batch.

Additionally, the master batch may further comprise usual additives for utilization with polyolefins, such as further pigments, stabilizers, acid scavengers, further UV-stabilizers, antistatic agents, utilization agents (such as processing aid agents), demoulding agents, nucleating agents, fillers or foaming agents and the like or any combination thereof.

The total amount of such usual additives usually is 10 wt.-% or below based on the total weight of the master batch.

Preferably, the master batch according to the use of the present invention is added to the base resin in the compounding step described below.

Preferably, the concentration of the master batch in the polyolefin composition according to the use of the present invention is 0.5 to 10 wt.-% based on the total weight of the polyolefin composition. More preferably, the concentration is 1 to 5 wt.-% and most preferably 1.5 to 3 wt.-%.

In addition to the master batch according to the use of the present invention one or more further master batches having a different composition may be comprised in the polyolefin composition according to the use of the present invention.

Preferably, the one or more further master batches are added to the base resin in the compounding step described below.

### 6) Polyolefin composition

Preferably the polyolefin composition according to the use of the present invention comprises a base resin comprising a polyolefin homo- or copolymer.

The term "base resin" denotes in case no master batch is added to the base resin the entirety of polymeric components in the polyolefin composition according to the use of the present invention, usually making up at least 90 wt.-% of the total weight of the polyolefin composition.

In case a master batch is added to the base resin the term "base resin" denotes the entirety of polymeric components in the polyethylene composition according to the use of the present invention except the polymeric carrier material comprised in the master batch added to the base resin.

The entirety of polymeric components in the polyolefin composition usually makes up at least 90 wt.-% of the total weight of the polyolefine composition.

Preferably, the polyolefin composition is a polyethylene composition.

It is preferred that the base resin comprises an ethylene homo- or copolymer.

It is more preferred that the base resin consists of an ethylene homo- or copolymer.

In one embodiment of the invention the base resin comprises two or more polyethylene fractions with different weight average molecular weight. Such resins usually are denoted as multimodal resins.

Polyolefin compositions and in particular polyethylene compositions comprising multimodal base resins are frequently used e.g. for the production of pipes due to their favorable physical and chemical properties as e.g. mechanical strength, corrosion resistance and long-term stability. Such compositions are described e.g. in EP 0 739 937 and WO 02/102891. An especially suitable polyolefin composition for the use in the present invention is the polyethylene composition described in the Example according to the invention of EP 1 655 333.

The term molecular weight as used herein generally denotes the weight average molecular weight M_{w}.

As mentioned, usually a polyolefin composition and in particular a polyethylene composition comprising at least two polyolefin fractions, which have been produced under different polymerisation conditions resulting in different weight average molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyolefin or polyethylene will show two or more maxima or at least be distinctly broadened in comparison with the curves for the individual fractions.

For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the preferred embodiment wherein the base resin consists of two polyethylene fractions, the fraction having a lower weight average molecular weight is denoted fraction (i), the other is denoted fraction (ii).

Fraction (i) preferably is an ethylene homopolymer. As a matter of definition, the expression "ethylene homopolymer" used herein relates to an ethylene polymer that consists substantially, i.e. to at least 98 wt.-%, preferably at least 99 wt.-%, most preferably 99.8 wt.-% of ethylene units.

Fraction (ii) preferably is an ethylene copolymer, and preferably comprises at least 0.1 mol% of at least one alpha-olefin comonomer. The content of comonomer is preferably at most 14 mol%.

The comonomer content of the base resin of the polyolefin composition according to the use of the present invention is preferably at least 0.1 mol%, more preferably at least 0.3 mol%, and still more preferably at least 0.7 mol% of at least one alpha-olefin comonomer. The comonomer content is preferably at most 7.0 mol%, more preferably at most 6.0 mol%, and still more preferably at most 5.0 mol%.

As an alpha-olefin comonomer, preferably an alpha-olefin having from 4 to 8 carbon atoms is used. Still more preferably an alpha-olefin selected from 1-butene, 1-hexene, 4-methyl-1-pentene and 1-octene is used. Most preferably the alpha-olefin is 1-hexene.

The base resin preferably has an MFR₅ (190 °C, 5 kg) in the range of 0.01 to 2.0 g/10 min when measured according to ISO 1133, condition T. More preferably, the MFR₅ is in the range of 0.05 to 1.0 g/10 min and most preferably in the range of 0.1 to 0.6 g/10 min.

The density of the base resin preferably is in the range of 925 to 965 kg/m³, more preferably of 932 to 955 kg/m³, even more preferably of 935 to 951 kg/m³ and most preferably 942 to 950 kg/m³ when measured according to ISO 1183-1:2004 (Method A).

In addition to the base resin and the macrocyclic organic pigment (B) and/or the UV-stabilizer (A) usual additives for utilization with polyolefins, such as further pigments, antioxidants, stabilizers, acid scavengers, further UV-stabilizers, antistatic agents, utilization agents (such as processing aid agents), demoulding agents, nucleating agents, fillers or foaming agents and the like or a combination thereof may be comprised in the polyolefin composition according to the use in the present invention.

The total amount of such usual additives usually is 10 wt.-% or below based on the total weight of the polyolefin composition.

The polymerisation catalysts for the production of the base resin used in the present invention include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a MgCl₂-based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235. Most preferably, as a catalyst, a Ziegler-Natta catalyst in accordance with Example 1 of EP 0 688 794 is used.

Preferably the polyolefin composition is produced in a process comprising a compounding step.

In the compounding step the UV-stabilizer (A) or the master batch or any combination of one or more of them as defined above and optionally usual additives and further master batches are added to the base resin - which is typically obtained as a base resin powder from the reactor - and are extruded together in an extruder to yield the composition according to the use of the present invention.

However, the adding of the UV-stabilizer (A) or of the master batch or any combination of one or more of them as defined above and optionally usual additives and further master batches may also occur during the polymerisation process of the fractions (i) and/or (ii) of the base resin and/or they may be added to the polyolefin composition before or after the compounding step.

Of course, when using the polyolefin composition according to the use of the present invention, further compounds selected from conventional additives, fillers, minerals and lubricants may be added for improving processability and surface characteristics thereof.

The polyolefin composition according to the use of the present invention surprisingly shows an improved resistance to the exposure to chlorine species containing water.

Preferably, the polyolefin composition according to the use of the present invention has a time to failure upon exposure to chlorine dioxide containing water at a chlorine dioxide concentration of 1 mg/l and a temperature of 40°C of 350 days or more when measured according to the chlorine species resistance test. More preferably, the composition has a time to failure of 450 days or more, even more preferably of 500 days or more and most preferably of 565 or more. The upper limit of the time to failure usually does not exceed 5000 days.

Furthermore, the polyolefin composition according to the use of the present invention has preferably an oxidation induction time (OIT) of at least 10% of the initial oxidation induction time, more preferably of at least 50%, even more preferably of at least 75% and most preferably of at least 80% after the exposure to chlorine dioxide containing water at a chlorine dioxide concentration of 1 mg/l and a temperature of 40°C for 1 month when determined according to the OIT Measurement.

The polyolefin composition according to the use of the present invention is preferably used in pipes. Such pipes show an improved resistance against chlorine species containing water.

The term "pipe" comprises pipes as well as all supplementary parts for pipes such as fittings, valves, chambers and all other parts which are commonly necessary for a piping system.

Preferably, such a pipe is used for the transport of water. More preferably, such a pipe is used for the transport of chlorine species containing water. It is even more preferred that the pipe is used for the transport of chlorine containing water and/or chlorine dioxide containing water. It is most preferred that the pipe is used for the transport of chlorine dioxide containing water.

The pipe is suitable for the use in a drinking water supply system.

The pipe may be used as a hot and/or cold water pipe, i.e. that it is designed for the transport of hot and/or cold water and/or chlorine species containing water.

The pipes are preferably produced by extrusion of the polyolefin composition according to the use of the present invention.

Preferably, a pipe according to the use of the present invention has a time to failure upon exposure to chlorine dioxide containing water at a chlorine dioxide concentration of 1 mg/l and a temperature of 40°C of 350 days or more when measured according to the chlorine species resistance test. More preferably, the pipe has a time to failure of 450 days or more, even more preferably of 500 days or more and most preferably of 565 or more. The upper limit of the time to failure usually does not exceed 5000 days.

Furthermore, a pipe according to the use of the present invention has preferably an oxidation induction time of at least 10% of the initial oxidation induction time, more preferably of at least 50%, even more preferably of at least 75% and most preferably of at least 80% after the exposure to chlorine dioxide containing water at a chlorine dioxide concentration of 1 mg/l and a temperature of 40°C for 1 month when determined according to the OIT Measurement.

### Figure

Figure 1 illustrates the percent of OIT after 1 month treatment with chlorine dioxide containing water when determined according to the OIT Measurement of Test 1.
Figure 2 illustrates the OIT in [min] after treatment with chlorine dioxide containing water when determined according to the OIT Measurement of Test 2.

### Examples

### Definitions and Measurement methods

### a) Chlorine species resistance test

The extrusion was performed on a Battenfeld Uniex 1-45- 25 D extruder, year of manufacture 1987 and a 3-zone screw. The compositions to be tested are formed into pipes having an outer diameter of 25 mm, a wall thickness of 2.3 mm and a length of 1 m.

The following temperature profile was applied for pipe extrusion:

| | **Inlet** | **Cylinder** | | | **Pipe Head** | | | | | **Die** |
|---|---|---|---|---|---|---|---|---|---|---|
| Zone | 0 | 1 | 2 | 3 | 1 | 2 | 3 | 4 | 5 | 6 |
| [°C] | 49 | 175 | 180 | 185 | 195 | 195 | 195 | 195 | 195 | 195 |

The pipes were subjected to water containing chlorine dioxide in a concentration of 1 mg/l +/- 0.05 at a hydrostatic stress of 0.6 MPa and a temperature of 40 °C. The flow rate of the water was 200 liter/hour. The chlorine dioxide concentration was monitored and controlled during the measurement. In the tests two pipes of each composition were tested. Each pipe was tested until failure.

### b) OIT Measurement (Test 1)

The oxidation induction time (OIT) at 200 °C is determined with a TA Instrument Q20 according to ISO11357-6. Calibration of the instrument is performed with Indium and Tin, according to ISO 11357-1. The maximum error in temperature from calibration was less than 0.1 K. Each test specimen is placed in an open aluminium crucible, heated from 25 °C to 200 °C at a rate of 20 °C min⁻¹ in nitrogen (>99.95 vol.% N₂, < 5 ppm O₂) with a gas flow rate of 50 mL min⁻¹, and allowed to rest for 5 min before the atmosphere was switched to pure oxygen (>99.95 vol.% O₂), also at a flow rate of 50 mL min⁻¹. The samples were maintained at constant temperature, and the exothermal heat associated with oxidation was recorded. The OIT is the time interval between the initiation of oxygen flow and the onset of the oxidative reaction. Each presented data point was the average of three independent measurements.

The OIT was measured on samples of pipes before (initial oxidation induction time), i.e. at 0 month, and after 1 month treatment with chlorine dioxide containing water using the same conditions as described above for the chorine species resistance test in paragraph (a). Subsequently, the percentage of the OIT after 1 month (% OIT after 1 month) with respect to the initial OIT was calculated.

### Sample preparation:

The compositions to be tested were formed in pipes and exposed to chlorine dioxide containing water, both in accordance with the chorine species resistance test described in paragraph (a). After 1 month the chorine species resistance test was stopped and from the tested pipes test specimens for the OIT measurement were prepared. For this purpose from the inner surface of the tested pipes polymer samples with a thickness of 0.6 mm were cut using a turning machine and discharged. Subsequently, from the cut regions further polymer samples with a thickness of 0.2 mm were cut using a turning machine and collected. From these samples with a thickness of 0.2 mm compression moulded plates with a thickness of 1 ± 0.1 mm were produced at a temperature of 190°C. From these compression moulded plates the test specimens for the OIT test having a cylindrical geometry with a diameter of 5 mm and thickness of 1 ± 0.1 mm with a weight of 10 ± 2 mg were cut.

### c) OIT Measurement (Test 2)

### Sample preparation:

Tapes with a dimension of 35 mm width and 0.3 mm thickness were extruded on a Collin teach-line E 20T extruder. The tapes were produced with the following set temperatures: 180/190/210°C and 30 rpm.

### Chlorine dioxide exposure:

The exposure of the tape samples to water containing 10 ppm ClO2 were conducted at KTH lab scale equipment. The pH was held constant at 6.8 ± 10 0.1 and the experiments were conducted at 70°C. Disk samples through the tape thickness (0.3 mm) were punctured out for the OIT210°C measurements. In the test method applied here, the following modification was performed. Instead of using a squalane phase, polyethylene compounds were used. The compounds were then extruded in the form of a thin tape (0.3 mmthickness) and these tapes were then inserted into the chlorine dioxidecontaining water using the same set up as discussed in Polymer Testing, Volume 28, Issue 6, September 2009, pages 661-667. The part of the tape samples were then withdrawn from the water contact at different intervals of time and analyzed by OIT210°C measurement.

### OIT measurement:

The oxidation induction time (OIT) at 210°C was determined in a temperature- and energy-calibrated Mettler-Toledo DSC-820 according to ASTM D3895. Calibration of the instrument was performed by melting of highly pure indium and highly pure zinc and by recording the onset of melting and the heat of fusion for each of these substances. The maximum error in temperature from calibration was less than 0.1 K. Each polymer sample (cylindrical geometry with a diameter of 5 mm and thickness of 0.3 ± 0.05 mm) with a weight of 5 ± 1 mg was enclosed in a 100 ul standard aluminum crucible with three holes (diameter = 1 mm) in the cover, heated from 25 °C to 210°C at a rate of 10 °C min-1 in nitrogen (>99.95 vol.% N2, < 5 ppm 02) with a gas flow rate of 50 ml min-1, and allowed to rest for 5 min before the atmosphere was switched to pure oxygen (>99.95 vol.% 02), also at a flow rate of 50 ml min-1. The samples were maintained at constant temperature, and the exothermal heat associated with oxidation was recorded. The oxidation induction time was determined as the time between the onset of the oxygen flow and the intersection between the isothermal baseline and the tangent at 1.5 W g-1 deviation from the baseline. Each presented data point was the average of two independent measurements.

The tangent method, described above, is the preferred means of determining the intercept point. If the oxidation reaction is slow, however, the exothermic peak becomes a leading edge, where it may be difficult to select an appropriate tangent.

If the selection of the appropriate baseline is not obvious using the tangent method, an offset method may be used. Accordingly, a second baseline is drawn parallel to the first baseline at a distance of 0.05 W/g above the first baseline. The intersection of this second line with the 15 exothermal signal is defined as the onset of oxidation.

Double samples of each condition are measured, and the mean value is calculated. The OIT210°C value of a sample which was not previously exposed to chlorine dioxide signifies the initial OIT210°C value.

Oxidation induction time (OIT210°C) measurements were performed after different exposure times in the above chlorine dioxide-containing water.

### d) Density

Density is measured according to ISO 1183-1:2004 (method A) on compression moulded specimen prepared according to EN ISO 1872-2 (February 2007) and is given in kg/m³.

### e) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene at a load of 2.16 kg (MFR₂) or 5.00 kg (MFR₅).

### f) MRS

The MRS of pipes prepared according to ISO 1167 is extrapolated according to the principles of ISO 9080. T

**List of Additives**

| | |
|---|---|
| *Irgafos 168:* | Antioxidant, |
| | Tris(2,4-di-tert. butylphenyl)phosphate obtained from BASF, |
| | CAS No.: 31570-04-4 |
| | |
| *Ca stearate:* | obtained from Faci, |
| | CAS No.: 1592-23-0 |
| | |
| *Tinuvin 622:* | UV-Stabilizer, |
| | Dimethyl succinate polymer with 4-hydroxy-2,2,6,6-tetramethyl-1-piperidine ethanol obtained from BASF, |
| | CAS No.: 65447-77-0 |
| | |
| Pigment Blue 29 | CAS No.: 57455-37-5 (Ultramarin Blue) |
| | |
| Pigment Blue 15:1 | CAS No.: 147-14-8 (Phthalocyanine Blue) |
| | |
| Pigment White 6 | CAS No.: 13463-67-7 |
| | |
| *Elftex TP:* | Carbon Black from Cabot |
| | CAS No.: 1333-86-4 |
| | |
| *PE-1:* | Polyethylene, MFR₂ of 2 g/10 min and a density of 923 kg/m³, |
| | |
| *PE-2:* | Polyethylene, MFR₂ of 12 g/10 min and a density of 962 kg/m³, |

**Blue master batch (Blue MB):**

| | |
|---|---|
| Pigment Blue 15:1 | 2.5 wt.-% |
| Pigment Blue 29 | 8.5 wt.-% |
| Pigment White 6 | 2.7 wt.-% |
| PE-1 | 86.3 wt.-% |

**Carbon Black Master batch (CB-MB):**

| | |
|---|---|
| Elftex TP | 39.5 wt.-% |
| PE-2 | 60.5 wt.-% |

### Polyethylene compositions

### a) Inventive Example (IE):

The bimodal base resin used for compounding has a density of 948 kg/m³ and a MFR₅ of 0.3 g/10 min. The base resin of the IE is produced as described in the example of EP 1 655 333. The density of the polyethylene composition of the IE is 959 kg/m³ and the MFR₅ is 0.3g/10 min. The resultant polyethylene composition of the IE is classified as PE-100 material (MRS 10.0 N/mm²).

### b) Comparative Example 1 (CE1):

The density of the polyethylene composition of the CE1 is 959 kg/m³ and the MFR₅ 0.3 g/10 min. The resultant polyethylene composition of the CE1 is classified as PE-100 material (MRS 10.0 N/mm²).

### c) Comparative Example 2 (CE2):

The density of the polyethylene composition of the CE2 is 951 kg/m³ (ISO 1872-2/ISO 1183) and the MFR₅ and the MFR₅ 0.9 g/10 min (ISO 1133, 190°C, 5.0 kg). The resultant polyethylene composition of the CE2 is classified as PE-80 material (MRS 8.0 N/mm²).

### Chorine species resistance test and OIT Measurement (Test 1)

For the OIT measurement (Test 1) the inventive and comparative examples were compounded/melt homogenized in a Buss-Co-Kneader 100 MDK/E-11 L/D. The respecive base resin and additives as listed in Table 2 were fed into the first mixer inlet of the Buss Co-Kneader which is a single screw extruder with a downstream discharge single extruder with pelletizing unit cutting pellets in molten stage and cooled via water.

The mixer temperature profile was 113/173/199/193/200 °C from first inlet to outlet, and discharge extruder temperature 166 °C. The mixer screw rpm was 201 rpm and the throughput 200 kg/h.

The compositions of IE, CE1 and CE2 were formed in pipes and exposed to chlorine dioxide containing water in accordance with the chorine species resistance test under item a). Table 2 shows the results of the chlorine species resistance test. For each composition, the IE, CE1 and CE2, two tests were performed and the resultant days to failure averaged.

Additionally, table 2 indicates the contents of additives and pigments in IE, CE1 and CE2.

**Table 2: Contents of additives contained in the polyethylene compositions of IE, CE1 and CE2 and results of the chlorine species resistance test**

| **Polyethylene composition** | **IE** | **CE1** | **CE2** |
|---|---|---|---|
| base resin [wt.-%] | 97.48 | 93.88 | 93.88 |
| Irganox 1010 [wt.-%] | 0.11 | 0.11 | 0.11 |
| Irgafos 168 [wt.-%] | 0.11 | 0.11 | 0.11 |
| Ca-Stearate [wt.-%] | 0.15 | 0.15 | 0.15 |
| Tinuvin 622 [wt.-%] | 0.25 | / | / |
| Blue MB | 1.9 | / | / |
| CB-MB [wt.-%] | / | 5.75 | 5.75 |
| color | blue | black | black |
| material | PE-100 | PE-100 | PE-80 |
| Time to failure, average [days] | **>567** | **341** | **314** |

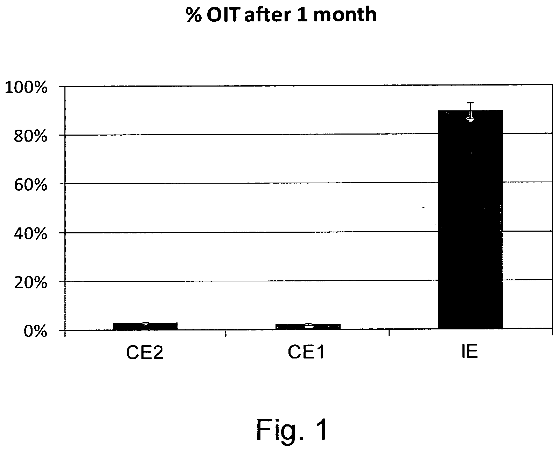

Moreover, the compositions of IE, CE1 and CE2 were subjected to an oxidation induction time (OIT) measurement. Again, the compositions of IE, CE1 and CE2 were formed in pipes and exposed to chlorine dioxide containing water in accordance with the chorine species resistance test under item a). After 1 month the chorine species resistance test was stopped and the OIT Measurement as described above under item b) performed. Table 3 shows the results of the OIT Measurement before ClO₂ exposure (initial OIT at 0 month) and after 1 month treatment with chlorine dioxide containing water under the test conditions of the chorine species resistance test. Each value is the average of three independent measurements. In table 3 and figure 1 the results of the percent OIT remained after 1 month (% OIT after 1 month) are illustrated.

**Table 3: OIT Measurement of IE, CE1 and CE2**

| Example | OIT [min] | | % OIT after 1 month |
|---|---|---|---|
| | 0 month | 1 month | |
| IE | 107 | 95.9 | 89.6 |
| CE1 | 63 | 1.5 | 2.4 |
| CE2 | 60 | 2 | 3.3 |

### OIT measurement (Test 2):

For the OIT measurement (Test 2) the base resin of the inventive example IE was compounded in a Buss-Co-Kneader 100 MDK/E-11 L/D with different additives to form Compounds 1, 2, 3, 4, and 5. The respecive base resin and additives as listed in Table 4 were fed into the first mixer inlet of the Buss Co-Kneader which is a single screw extruder with a downstream discharge single extruder with pelletizing unit cutting pellets in molten stage and cooled via water. The mixer temperature profile was 113/173/199/193/200 °C from first inlet to outlet, and discharge extruder temperature 166 °C. The mixer screw rpm was 201 rpm and the throughput 200 kg/h.

**Table 4: Contents of additives contained in the polyethylene compositions of Compounds 1-5**

| **Polyethylene composition** | **1** | **2** | **3** | **4** | **5** |
|---|---|---|---|---|---|
| base resin [wt.-%] | 99.63 | 99.33 | 99.58 | 99.47 | 99.38 |
| Irganox 1010 [wt.-%] | 0.11 | 0.11 | 0.11 | 0.11 | 0.11 |
| Irgafos 168 [wt.-%] | 0.11 | 0.11 | 0.11 | 0.11 | 0.11 |
| Ca-Stearate [wt.-%] | 0.15 | 0.15 | 0.15 | 0.15 | 0.15 |
| Tinuvin 622 [wt.-%] | / | 0.25 | / | / | 0.25 |
| Pigment Blue 29 [wt-%] | / | / | / | 0.16 | / |
| Pigment Blue 15:1 [wt.-%] | / | 0.05 | 0.05 | / | / |

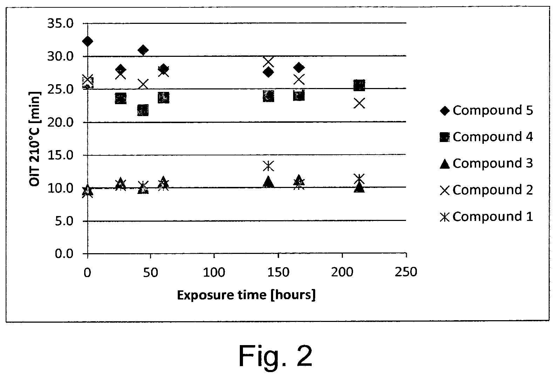

The compounds were subjected to the OIT measurement (Test 2) as described in item c) above. In table 5 and figure 2 the results of the OIT in min of compounds 1-5 after exposure to chlorine dioxide containing water are illustrated.

**Table 5: OIT in [min] of Compounds 1-5 after exposure to chlorine dioxide containing water**

| **Exposure time (h)** | **1** | **2** | **3** | **4** | **5** |
|---|---|---|---|---|---|
| 0 | 9.4 | 26.5 | 9.8 | 26.0 | 32.3 |
| 26 | 10.4 | 27.3 | 10.8 | 23.7 | 28.0 |
| 44 | 10.3 | 25.8 | 10.0 | 21.9 | 31.0 |
| 60 | 10.4 | 27.7 | 11.0 | 23.7 | 28.1 |
| 142 | 13.3 | 29.1 | 11.0 | 23.9 | 27.6 |
| 166 | 10.5 | 26.5 | 11.2 | 24.1 | 28.3 |
| 213 | 11.3 | 22.9 | 10.1 | 25.5 | n.d. |

| | | | | | |
|---|---|---|---|---|---|
| n.d. not determined | | | | | |

## Claims

1. Use of an UV-stabilizer (A) of formula (I): 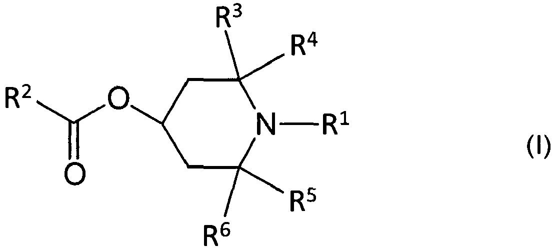 wherein
- R¹ and R² are independently H or non-substituted or substituted aliphatic or aromatic hydrocarbyl radicals which may comprise ester groups and heteroatoms; and
- R³, R⁴, R⁵ and R⁶ are independently non-substituted or substituted aliphatic C₁-C₄ hydrocarbyl radicals;
for increasing the resistance of a polyolefin composition against degradation caused by contact with chlorine dioxide containing water, wherein the polyolefin composition further comprises a macrocyclic organic pigment (B).

2. Use of claim 1, wherein the concentration of the macrocyclic organic pigment (B) is 0.01 to 10 wt.-% based on the total polyolefin composition.

3. Use of claims 1 or 2, wherein the macrocyclic organic pigment (B) is a phthalocyanine (Pc) and/or a derivative thereof.

4. Use of any of the preceding claims, wherein the concentration of the UV-stabilizer (A) is 0.01 to 1 wt.-% based on the total polyolefin composition.

5. Use of any of the preceding claims, wherein the UV-stabilizer (A) has the following formula (II): 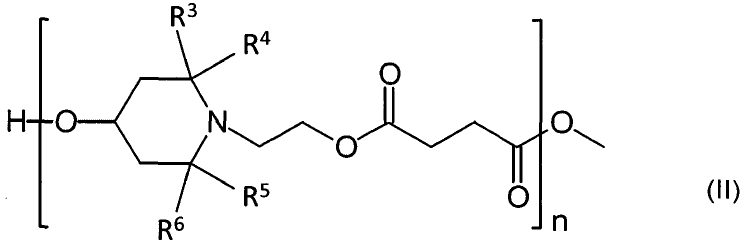 wherein
- R³, R⁴, R⁵ and R⁶ are independently non-substituted or substituted aliphatic C₁-C₁₀ hydrocarbyl radicals; and
- n is 2 to 250.

6. Use of any of the preceding claims, wherein the polyolefin composition further comprises one or more inorganic pigments (C).

7. Use of claim 6, wherein the concentration of the one or more inorganic pigments (C) is 0.01 to 1 wt.-% based on the total polyolefin composition.

8. Use of claims 6 or 7, wherein the one or more inorganic pigments (C) are selected from Ultramarine Blue having the CAS No. 57455-37-5 and/or titanium dioxide having the CAS No. 13463-67-7 or a combination thereof.

9. Use of any of the preceding claims, wherein the polyolefin composition comprises a base resin comprising a polyethylene homo- or copolymer.

10. Use of any of the preceding claims, wherein the time to failure of said polyolefin composition upon exposure to chlorine dioxide containing water at a chlorine dioxide concentration of 1 mg/l and a temperature of 40°C is 350 days or more.

11. Use of any of the preceding claims, wherein the polyolefin composition has an oxidation induction time of at least 10% of the initial oxidation induction time after the exposure to chlorine dioxide containing water at a chlorine dioxide concentration of 1 mg/l and a temperature of 40°C for 1 month.

## Patentansprüche

1. Verwendung von einem UV-Stabilisator (A) mit der Formel (I): 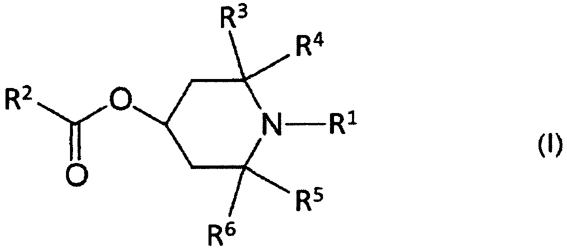 wobei
- R¹ und R² unabhängig H oder nicht-substituierte oder substituierte aliphatische oder aromatische Hydrocarbylradikale sind, die Estergruppen und Heteroatome umfassen können; und
- R³, R⁴, R⁵ und R⁶ unabhängig nicht-substituierte oder substituierte aliphatische C₁-C₄ Hydrocarbylradikale sind;
zum Erhöhen von der Beständigkeit von einer Polyolefinzusammensetzung gegenüber Abbau, welcher durch den Kontakt mit chlordioxidhaltigem Wasser verursacht wird, wobei die Polyolefinzusammensetzung ferner ein makrocyclisches organisches Pigment (B) umfasst.

2. Verwendung nach Anspruch 1, wobei die Konzentration von dem makrocyclischen organischen Pigment (B) 0,01 bis 10 Gew.-% beträgt, basierend auf der gesamten Polyolefinzusammensetzung.

3. Verwendung nach Anspruch 1 oder 2, wobei das makrocyclische organische Pigment (B) ein Phthalocyanin (Pc) und/oder ein Derivat davon ist.

4. Verwendung nach einem der vorhergehenden Ansprüche, wobei die Konzentration von dem UV-Stabilisator (A) 0,01 bis 1 Gew.-% beträgt, basierend auf der gesamten Polyolefinzusammensetzung.

5. Verwendung nach auch einem der vorhergehenden Ansprüche, wobei der UV-Stabilisator (A) die folgende Formel (II) aufweist: 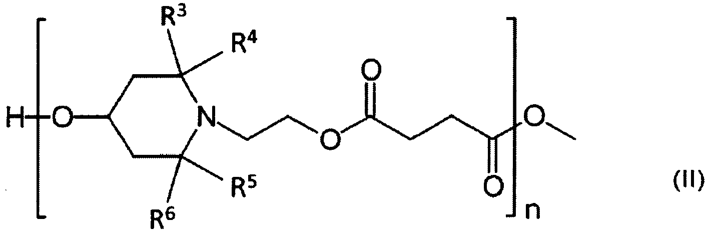 wobei
- R³, R⁴, R⁵ und R⁶ unabhängig nicht-substituierte oder substituierte aliphatische C₁-C₁₀ Hydrocarbylradikale sind; und
- n 2 bis 250 ist.

6. Verwendung nach einem der vorhergehenden Ansprüche, wobei die Polyolefinzusammensetzung ferner ein oder mehrere anorganische Pigmente (C) umfasst.

7. Verwendung nach Anspruch 6, wobei die Konzentration von den ein oder mehreren anorganischen Pigmenten (C) 0,01 bis 1 Gew.-% beträgt, basierend auf der gesamten Polyolefinzusammensetzung.

8. Verwendung nach Anspruch 6 oder 7, wobei die ein oder mehreren anorganischen Pigmente (C) aus Ultramarinblau, das die CAS-Nr. 57455-37-5 hat, und/oder Titandioxid, das die CAS-Nr. 13463-67-7 hat, oder einer Kombination davon ausgewählt sind.

9. Verfahren nach einem der vorhergehenden Ansprüche, wobei die Polyolefinzusammensetzung ein Basisharz umfasst, das ein Polyethylenhomo- oder -copolymer umfasst.

10. Verwendung nach einem der vorhergehenden Ansprüche, wobei die Zeitspanne bis zum Versagen von der Polyolefinzusammensetzung infolge der Exposition zu chlordioxidhaltigem Wasser mit einer Chlordioxidkonzentration von 1 mg/l und einer Temperatur von 40 °C 350 Tage oder mehr beträgt.

11. Verwendung nach einem der vorhergehenden Ansprüche, wobei die Polyolefinzusammensetzung eine Oxidationsinduktionszeit von mindestens 10 % von der anfänglichen Oxidationsinstruktionszeit nach der Exposition zu chlordioxidhaltigem Wasser bei einer Chlordioxidkonzentration von 1 mg/l und einer Temperatur von 40 °C für 1 Monat aufweist.

## Revendications

1. Utilisation d'un stabilisateur UV (A) de formule (I) : 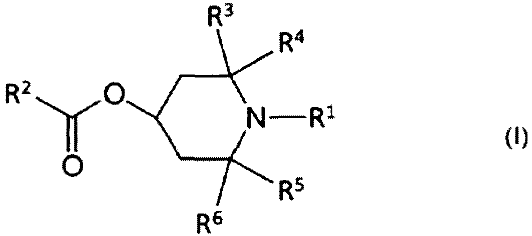 dans laquelle
- R¹ et R² sont indépendamment H ou des radicaux hydrocarbyle aliphatiques ou aromatiques non substitués ou substitués qui peuvent comprendre des groupes esters et des hétéroatomes ; et
- R³, R⁴, R⁵ et R⁶ sont indépendamment des radicaux hydrocarbyle en C₁ à C₄ aliphatiques non substitués ou substitués ;
pour augmenter la résistance d'une composition polyoléfinique vis-à-vis d'une dégradation provoquée par un contact avec de l'eau contenant du dioxyde de chlore, la composition polyoléfinique comprenant en outre un pigment organique macrocyclique (B).

2. Utilisation selon la revendication 1, dans laquelle la concentration en pigment organique macrocyclique (B) est de 0,01 à 10 % en poids en se basant sur la composition polyoléfinique totale.

3. Utilisation selon la revendication 1 ou 2, dans laquelle le pigment organique macrocyclique (B) est une phtalocyanine (Pc) et/ou un dérivé de celle-ci.

4. Utilisation selon l'une quelconque des revendications précédentes, dans laquelle la concentration en stabilisateur UV (A) est de 0,01 à 1 % en poids en se basant sur la composition polyoléfinique totale.

5. Utilisation selon l'une quelconque des revendications précédentes, dans laquelle le stabilisateur UV (A) répond à la formule (II) suivante : 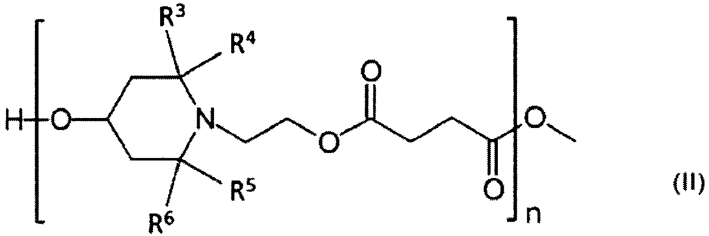 dans laquelle
- R³, R⁴, R⁵ et R⁶ sont indépendamment des radicaux hydrocarbyle en C₁ à C₁₀ aliphatiques non substitués ou substitués ; et
- n vaut de 2 à 250.

6. Utilisation selon l'une quelconque des revendications précédentes, dans laquelle la composition polyoléfinique comprend en outre un ou plusieurs pigments inorganiques (C).

7. Utilisation selon la revendication 6, dans laquelle la concentration en un ou plusieurs pigments inorganiques (C) est de 0,01 à 1 % en poids en se basant sur la composition polyoléfinique totale.

8. Utilisation selon la revendication 6 ou 7, dans laquelle le ou les pigments inorganiques (C) sont choisis parmi le bleu ultramarine ayant le numéro CAS 57455-37-5 et/ou le dioxyde de titane ayant le numéro CAS 13463-67-7 ou une combinaison de ceux-ci.

9. Utilisation selon l'une quelconque des revendications précédentes, dans laquelle la composition polyoléfinique comprend une résine de base comprenant un homo- ou copolymère de polyéthylène.

10. Utilisation selon l'une quelconque des revendications précédentes, dans laquelle la durée avant défaillance de ladite composition polyoléfinique lors d'une exposition à de l'eau contenant du dioxyde de chlore à une concentration en dioxyde de chlore de 1 mg/l et une température de 40 °C est de 350 jours ou plus.

11. Utilisation selon l'une quelconque des revendications précédentes, dans laquelle la composition polyoléfinique a une durée d'induction d'oxydation d'au moins 10 % de la durée d'induction d'oxydation initiale après l'exposition à de l'eau contenant du dioxyde de chlore à une concentration en chlore de 1 mg/l et une température de 40 °C pendant 1 mois.
